# FASCICULE DE BREVET EUROPEEN

(11) **EP 3 080 659 B1**
(45) Date de publication et mention de la délivrance du brevet: **22.11.2017**
(21) Numéro de dépôt: 14827493.9
(22) Date de dépôt: 10.12.2014
(51) Int. Cl.: G02F 1/1334, G02F 1/1335, B32B 17/10, G02B 5/28

(54) **DISPOSITIF ELECTROCOMMANDABLE A PROPRIETES OPTIQUES VARIABLES**
ELEKTRISCH STEUERBARE VORRICHTUNG MIT VARIABLEN OPTISCHEN EIGENSCHAFTEN
ELECTRICALLY CONTROLLABLE DEVICE HAVING VARIABLE OPTICAL PROPERTIES

(30) Priorité: 12.12.2013 FR 1362494
(43) Date de publication de la demande: 19.10.2016
(73) Titulaire: Saint-Gobain Glass France, 92400 Courbevoie (FR)
(72) Inventeur: LECAMP, Guillaume, F-75018 Paris (FR); LEYDER, Charles, 02138 Cambridge, Massachusetts (US); SCHIAVONI, Michele, F-75014 Paris (FR); VERMESCH, François-Julien, F-75014 Paris (FR); LEBEDEV, Dmitry, F-92130 Issy les Moulineaux (FR)
(74) Mandataire: Saint-Gobain Recherche
(86) Numéro de dépôt international: PCT/FR2014/053261
(87) Numéro de publication internationale: WO 2015/086997

(56) Documents cités:
- EP-A1- 0 823 653
- US-A1- 2004 169 789
- US-B1- 6 466 298

## Description

La présente invention concerne des systèmes électrocommandables à propriétés optiques variables, et plus précisément des systèmes du type vitrage dont on peut modifier la diffusion lumineuse sous l'effet d'une alimentation électrique appropriée, comme les systèmes à cristaux liquides et les valves optiques.

Accessoirement, l'invention s'applique de façon similaire aux systèmes qui présentent une diffusion lumineuse significative, mais seulement dans une gamme étroite d'angles d'incidence de vision, comme les systèmes holographiques. Elle s'applique également aux systèmes thermotropes, ainsi qu'aux systèmes à particules en suspension (connus sous l'abréviation anglaise S. P. D pour "suspended particles display").

Les systèmes à cristaux liquides utilisent un film fonctionnel à base d'un médium en polymère(s) dans lequel sont dispersées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision. Des exemples sont décrits dans les brevets EP-88 126, EP-268 877, EP-238 164, EP-357 234, EP-409 442 et EP-964 288. Ce type de film est généralement disposé entre deux substrats, par exemple deux feuilles de polymère munies d'électrodes, structure que l'on peut ensuite feuilleter entre deux verres pour constituer un vitrage. Ce type de vitrage est commercialisé par la société SAINT-GOBAIN GLASS sous la dénomination " Priva-Lite ". On peut en fait utiliser tous les dispositifs utilisant des cristaux dits NCAP (Nematic Curvilinearly Aligned Phase) ou PDLC (Polymer Dispersed Liquid Crystal).

Les systèmes à valves optiques utilisent généralement un film fonctionnel sous forme d'une matrice de polymère éventuellement réticulée, dans laquelle sont dispersées des microgouttelettes contenant des particules aptes à se placer selon une direction privilégiée sous l'action d'un champ électrique ou magnétique.

En fonction notamment du potentiel appliqué et/ou de la nature et de la concentration de particules orientables, le film va présenter une transmission lumineuse variable, généralement associée à une diffusion lumineuse variable (sous tension, les particules interceptent beaucoup moins la lumière que hors tension). Un exemple en est décrit dans le brevet WO93/09460, avec un film comprenant une matrice en polyorganosiloxane réticulable et des particules absorbantes du type polyiodure.

Beaucoup d'applications ont été envisagées pour ces types de système, par exemple pour équiper des cloisons internes ou constituer des vitrages extérieurs de bâtiments, (notamment dans des bureaux), ou dans des moyens de locomotion terrestres (train, voiture), aériens (avion) ou maritimes.

Comme évoqué dans le brevet EP-823 653, une application originale consiste à les utiliser en tant qu'écran de rétroprojection fonctionnant en transmission, où le projecteur se trouve d'un côté de l'écran et le spectateur de l'autre. Les utilisations possibles sont nombreuses : pour équiper des vitrines, pour des panneaux publicitaires, pour les panneaux d'affichage des gares ou des aéroports, par exemple. L'utilisation de systèmes à cristaux liquides rend possible la projection sans avoir à obscurcir le local où s'effectue la projection.

Cependant, si ces systèmes sont relativement satisfaisants en rétroprojection, ils ne fonctionnent pas correctement en projection, c'est-à-dire lorsque les spectateurs se trouvent du côté du projecteur. L'image n'est pas d'intensité ni de contraste suffisant.

Un but de l'invention est de fournir un vitrage à propriétés optiques électrocommandables entre un état transparent et un état diffusant qui puisse servir d'écran de projection à l'état diffusant.

A cet effet, l'invention a pour objet un vitrage à propriétés de transmission optique électrocommandables, ayant, dans au moins un état électrocommandable, une transmission lumineuse T_{L} supérieure ou égale à 60%, le vitrage comprenant :
- deux feuilles à fonction verrière ; et
- entre les deux feuilles à fonction verrière, un système actif à propriétés de transmission optique électrocommandables,
dans lequel le vitrage comprend en outre un empilement de couches minces transparent et réfléchissant comprenant :
- une couche fonctionnelle métallique ; et
- un revêtement en matériau diélectrique d'indice optique élevé et d'épaisseur optique suffisante pour que le vitrage présente trois pics de réflexion à trois longueurs d'ondes visibles.

Un avantage majeur d'un tel vitrage est de pouvoir être utilisé en projection avec une bonne qualité d'image, notamment un bon contraste et une neutralité de couleur sans nuire à la fonctionnalité « transparente » du vitrage à son état transparent.

Il convient en effet non seulement d'améliorer l'image de projection à l'état diffusant mais également de préserver l'aspect du vitrage dans son état transparent.

Suivant des modes particuliers de réalisation, le dispositif selon l'invention comporte en outre l'une ou plusieurs des caractéristiques techniques ci-dessous, prise(s) isolément ou suivant toutes les combinaisons techniquement possibles :
- l'empilement transparent et réfléchissant a un pic bleu en réflexion à λ compris entre 420nm et 480nm ;
- l'empilement transparent et réfléchissant a un pic vert à λ compris entre 500nm et 570nm ;
- l'empilement transparent et réfléchissant a un pic rouge en réflexion à λ compris entre 600nm et 700nm ;
- d'au moins un état du vitrage, la réflectivité vérifie -2 ≤ a* ≤ 2 et -2 ≤ b* ≤ 2 dans le système L*, a*, b* ;
- la couche fonctionnelle métallique est par exemple à base d'aluminium, de préférence à base d'argent ;
- le vitrage comprend, de part et d'autre de la couche fonctionnelle métallique, un revêtement antireflet, de préférence comprenant une couche diélectrique à base d'un oxyde métallique, de préférence à base d'un oxyde de zinc dopé aluminium ou d'un oxyde de titane ;
- ledit empilement transparent et réfléchissant comprend une seule couche fonctionnelle métallique ;
- ledit matériau diélectrique a une épaisseur optique allant de 800nm à 1600nm, de préférence de 900nm à 1400nm, de préférence encore de 1000nm à 1300nm ;
- ledit matériau diélectrique d'indice optique élevé est à base d'oxyde métallique, de préférence à base d'un oxyde mixte de zinc et d'étain ;
- ledit matériau diélectrique d'indice optique élevé comprend une seule couche ;
- ledit empilement transparent et réfléchissant est formé sur l'une des deux feuilles à fonction verrière ;
- ledit empilement transparent et réfléchissant est formé sur un substrat rapporté sur l'une des deux feuilles à fonction verrière, par exemple un film en matière thermoplastique ;
- le vitrage comprend un intercalaire de feuilletage en matière thermoplastique, dans lequel les deux feuilles à fonction verrière sont feuilletées ensemble par l'intermédiaire de l'intercalaire de feuilletage ;
- le vitrage présente dans au moins un état électrocommandable, une transmission lumineuse T_{L} supérieure ou égale à 70%.

L'invention a également pour objet un système de projection comprenant un vitrage tel que défini ci-dessus et un projecteur.

L'invention a encore pour objet un procédé de projection utilisant un projecteur et un vitrage tel que défini ci-dessus, le projecteur étant utilisant en projection (i.e. observateur du côté du projecteur).

L'invention sera mieux comprise à la lecture de la description qui va suivre, donnée uniquement à titre d'exemple, et faite en référence aux dessins annexés, sur lesquels :
- les figures 1A à 1D sont des vues schématiques en coupe de systèmes de projection comprenant chacun un projecteur et un vitrage électrocommandable selon l'art antérieur sur les figure 1A et 1B et selon l'invention sur les figures 1C et 1D ;
- la figure 2 est une vue schématique en coupe d'un empilement transparent et réfléchissant prévu sur l'une des feuilles à fonction verrière du vitrage selon l'invention ; et
- la figure 3 est un diagramme illustrant la réflectivité de l'empilement transparent et réfléchissant en fonction de la longueur d'onde et mettant en évidence trois pics de réflexion dans le domaine visible.

Les dessins ne sont pas à l'échelle, pour une représentation claire, car les différences d'épaisseur entre les feuilles à fonction verrière et les autres couches sont importantes, par exemple de l'ordre d'un facteur 500.

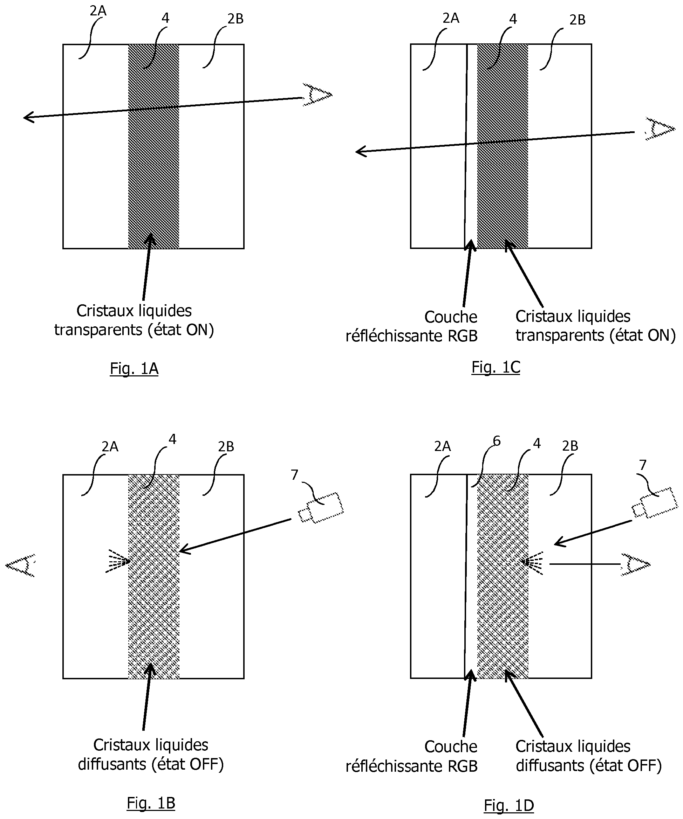

Les vitrages illustrés sur les figures 1A à 1D sont des vitrages à propriétés de transmission optique électrocommandables entre un état transparent et un état diffusant blanc.

Comme expliqué ci-dessus, le vitrage selon l'invention présente la particularité de pouvoir être utilisé comme écran de projection (figures 1C et 1D), i.e. pour un spectateur côté projecteur, plutôt que comme écran de rétroprojection, i.e. dans lequel le projecteur est situé derrière le vitrage.

A cet effet, le vitrage comprend, entre deux feuilles de verre 2A, 2B, plus généralement deux feuilles à fonction verrière, un système actif 4 commutable entre un état transparent et un état diffusant, par exemple un état diffusant blanc, et un empilement transparent et réfléchissant 6 sur la feuille arrière 2A, i.e. sur la feuille opposée au projecteur.

Le système actif 4 est de tout type adapté. Un exemple sera donné plus en détail plus après à titre illustratif.

L'invention concerne plus particulièrement l'empilement transparent et réfléchissant 6.

Il s'agit d'un empilement de couches minces déposé sur la face 2 du vitrage, en numérotant les faces du vitrage à partir du côté opposé au projecteur 7 illustré sur les figure 1B et 1D.

La face 2 est ainsi la face interne (i.e. la face tournée vers l'intérieur du vitrage) de la première feuille à fonction verrière 2A.

L'empilement transparent et réfléchissant 6 est multicouches, c'est-à-dire formé de plusieurs couches minces déposées sur la feuille à fonction verrière 2A.

On entend, dans tout le texte, par « une couche A (ou un empilement de couches) formée (ou déposée) sur une couche B », une couche A formée soit directement sur la couche B et donc en contact avec la couche B, soit formée sur la couche B avec interposition d'une ou plusieurs couches entre la couche A et la couche B.

L'empilement transparent et réfléchissant 6 est formé directement sur la feuille à fonction verrière 2A.

En variante cependant, une ou plusieurs couches intermédiaires peuvent être interposées.

D'une manière générale, l'empilement transparent et réfléchissant 6 est formé sur la feuille à fonction verrière.

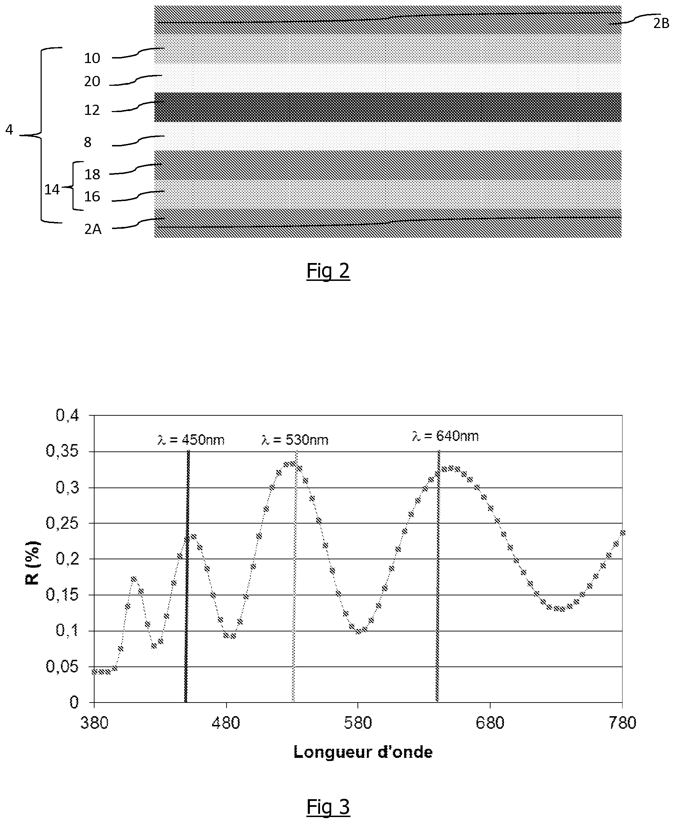

L'empilement transparent et réfléchissant 6 comprend essentiellement un revêtement fonctionnel métallique 8, et un revêtement fonctionnel diélectrique 10 d'indice optique élevé et d'épaisseur optique importante (voir figure 2). On entend par « fonctionnel » que ces revêtements sont indispensables à l'obtention de la fonction réfléchissante avec bon contraste des couleurs recherchée par l'invention.

Le nombre de revêtements fonctionnels 8, 10 est de tout type adapté, mais l'empilement ne présente de préférence qu'un seul revêtement fonctionnel métallique 8 et de préférence qu'un seul revêtement fonctionnel diélectrique 10, comme dans l'exemple illustré sur la figure 2.

Le revêtement fonctionnel métallique 8 est, dans l'exemple, formé d'une seule couche métallique, plus précisément, d'une seule couche d'argent.

De façon avantageuse, le revêtement fonctionnel métallique est à base d'argent ou d'aluminium ou à base d'alliage métallique contenant de l'argent ou de l'aluminium, par exemple constitué entièrement d'argent ou d'aluminium.

Dans le cas d'une seule couche d'argent, elle aura par exemple une épaisseur entre 3 et 10 nm.

A noter que, sauf indication contraire, on entend par épaisseur une épaisseur géométrique.

Le revêtement fonctionnel diélectrique est d'indice optique élevé et d'épaisseur optique suffisante pour que le vitrage présente trois pics de réflexion à trois longueurs d'ondes visibles, comme représenté sur la figure 3.

Les longueurs d'onde du domaine visible s'étendent de 390nm à 780nm.

Le matériau fonctionnel diélectrique d'indice optique élevé a par exemple un indice de réfraction allant de 1,8 à 2,3 mesuré à 550nm.

Il s'agit par exemple d'un matériau à base d'oxyde métallique, de préférence à base d'un oxyde mixte de zinc et d'étain ou à base d'oxyde de titane.

Comme indiqué préalablement ci-dessus, le revêtement fonctionnel diélectrique comprend de préférence une seule couche.

Le revêtement fonctionnel diélectrique a de préférence une épaisseur optique allant de 800nm à 1600nm, de préférence de 900nm à 1400nm, de préférence encore de 1000nm à 1300nm.

On entend par « épaisseur optique » le produit de l'épaisseur géométrique (i.e. physique) avec l'indice de réfraction du matériau (indice de réfraction considéré comme le veut l'usage à 550nm).

D'une manière générale, l'épaisseur totale des différentes couches de l'empilement transparent et réfléchissant 6 et notamment l'épaisseur de la ou chaque couche métallique fonctionnelle, sont suffisamment faibles pour obtenir une transmission lumineuse T_{L} de 65% au moins à travers l'empilement transparent et réfléchissant, de préférence au moins 68%, de préférence au moins 70%.

En outre, grâce à cette configuration, on obtient une neutralité en couleur de l'empilement transparent et réfléchissant. Les valeurs de a* et b* dans le système L, a*, b* sont ainsi comprises entre -2 et 2, même entre -1 et 1 pour a*.

Dans l'exemple illustré, on a plus particulièrement a*=0,7 et b*=-1.8, ce qui correspond à une couleur en réflexion relativement neutre, proche du blanc.

A noter que, dans l'exemple illustré sur la figure 2, le revêtement fonctionnel diélectrique 10 est formé sur le revêtement fonctionnel métallique 8.

D'une manière générale, le revêtement fonctionnel diélectrique 10 est formé sur le revêtement fonctionnel métallique 8. Mais en variante, le revêtement fonctionnel métallique peut être formé sur le revêtement fonctionnel diélectrique.

De préférence, l'empilement transparent et réfléchissant 6 comprend en outre de préférence une couche de blocage 12 immédiatement en contact avec la ou chaque couche fonctionnelle métallique du revêtement fonctionnel métallique 8, et directement formée sur et/ou sous la ou chaque couche fonctionnelle métallique, comme illustré sur la figure 2. La ou les couches de blocage 12 sont par exemple à base de titane ou de niobium.

Ainsi d'une manière générale, il s'agit d'un vitrage à propriétés de transmission optique électrocommandables, ayant, dans au moins un état électrocommandable, une transmission lumineuse TL supérieure ou égale à 60%, le vitrage comprenant :
- deux feuilles à fonction verrière ; et
- entre les deux feuilles à fonction verrière, un système actif à propriétés de transmission optique électrocommandables,
dans lequel le vitrage comprend en outre un empilement de couches minces transparent et réfléchissant comprenant :
- une couche fonctionnelle métallique ;
- un revêtement en matériau diélectrique d'indice optique élevé et d'épaisseur optique suffisante pour que le vitrage présente trois pics de réflexion à trois longueurs d'ondes visibles.

L'épaisseur optique du revêtement fonctionnel diélectrique est choisie de telle sorte que :
- l'empilement transparent et réfléchissant a un pic bleu en réflexion à λ compris entre 420nm et 480nm ;
- l'empilement transparent et réfléchissant a un pic vert à λ compris entre 500nm et 570nm ;
- l'empilement transparent et réfléchissant a un pic rouge en réflexion à λ compris entre 600nm et 700nm ;
- d'au moins un état du vitrage, la réflectivité vérifie -2 ≤ a* ≤ 2 et -2 ≤ b* ≤ 2 dans le système L*, a*, b*.

Dans le cas d'une couche d'oxyde de titane, choisie dans l'exemple illustré sur la figure 2, une épaisseur optique du revêtement fonctionnel diélectrique allant de 800nm à 1600nm, de préférence de 900nm à 1400nm, de préférence encore de 1000nm à 1300nm est préférée.

Par ailleurs, l'empilement transparent et réfléchissant 6 comprend de préférence au moins un revêtement antireflet 14 jouxtant la ou chaque couche fonctionnelle métallique du revêtement fonctionnel métallique 8.

Le nombre de revêtements antireflets est également de tout type adapté. Qui plus est, le nombre, la nature et l'épaisseur des couches minces constituant chaque revêtement antireflet est également de tout type adapté.

Le revêtement antireflet comprend au moins une couche mince. Dans le cas d'un revêtement antireflet constitué d'une seule couche mince, elle est d'indice optique élevé, par exemple d'indice optique compris entre 1,8 et 2,3, par exemple une couche d'oxyde de titane.

Dans le cas d'un revêtement antireflet constitué de plusieurs couches minces, il y a alternance couche d'indice optique élevé / couche d'indice optique intermédiaire.

Dans l'exemple illustré et de façon avantageuse, le revêtement antireflet 14 sous-jacent au revêtement fonctionnel métallique 8 comprend, outre la couche 16 d'indice optique élevé déposée sur le substrat 2A, une couche antireflet 18 d'indice optique intermédiaire, à base d'oxyde cristallisé, par exemple à base d'oxyde de zinc. Il s'agit de la dernière couche de l'empilement antireflet 14, i.e. de la couche supérieure. Cette couche 18, outre sa fonction antireflet, est dite de « mouillage », car elle a aussi pour fonction de favoriser la cristallisation des couches fonctionnelles métalliques déposées directement dessus, notamment dans le cas de couches à l'argent.

L'empilement transparent et réfléchissant 6 comprend également de préférence une couche de protection 20, par exemple également à base d'oxyde de zinc, comme dans l'exemple illustré. Cette couche a par exemple pour fonction de protéger la couche d'argent lors d'une pulvérisation magnétron subséquence en atmosphère réactive, par exemple pour déposer le revêtement fonctionnel diélectrique.

Dans l'exemple illustré, il s'agit plus précisément, en partant du substrat 2A, d' une alternance de deux couches minces antireflets 16 et 18, surmontés d'un revêtement fonctionnel métallique 8, puis d'une couche bloqueuse 12 et d'une couche de protection 20.

A titre d'exemple, l'empilement suivant a été déposé une feuille de verre standard de type silico sodo calcique servant de feuille 2A :
TiO₂(4,9nm)/ZnO(5,0nm)/Ag(7,0nm)/Ti(0,2nm)/ZnO(5,0nm)/TiO₂(491,9nm)

La feuille 2A est ensuite feuilletée à la feuille 2B par l'intermédiaire du système actif 4.

La figure 3 illustre la courbe de réflectivité du vitrage sans le système actif et donc de l'empilement transparent et réfléchissant 6.

Un système actif est décrit ci-dessous à titre d'exemple non limitatif.

Dans l'exemple qui suit, le système à cristaux liquides 1 est de configuration : feuille de PET (i.e feuille à fonction verrière formant susbtrat porteur/ électrode/film fonctionnel/électrode/feuille de PET (i.e. deuxième feuille à fonction verrière), le film fonctionnel étant actuellement utilisé dans les vitrages Priva-Lite de SAINT-GOBAIN GLASS.

Le film fonctionnel comportant l'émulsion liquide de cristaux liquides nématiques est d'une épaisseur d'environ 10 à 30 µm (de préférence 20 à 25 micromètres). Les feuilles de PET ont une épaisseur d'environ 175 µm. Les deux électrodes sont constituées d'ITO (oxyde d'indium dopé à l'étain) de résistivité environ 100 ohms par carré. La couche d'ITO formée sur l'empilement réfléchissant est illustrée sur la figure 2.

On donne ci-après quelques détails sur les cristaux liquides et leur médium utilisables. En ce qui concerne les cristaux liquides, ceux-ci peuvent être du type " NCAP ", notamment ceux utilisés dans les vitrages " Priva-Lite " ou " PDLC " qui ont été mentionnés plus haut. En règle générale, leur biréfringence est comprise entre 0,1 et 0,2, elle est variable notamment en fonction du médium utilisé, de l'ordre de 0,1 si le polymère du médium est de type polyuréthane (PU) et de l'ordre de 0,2 s'il est de type alcool polyvinylique (PVA).

Le médium est en effet de préférence à base d'un polymère de la famille des PU (latex) et/ou des PVA, généralement préparé en phase aqueuse dans une proportion de polymères de 15 à 50% en poids par rapport à l'eau.

Les éléments actifs vis-à-vis de la diffusion lumineuse sont avantageusement sous forme de gouttelettes de diamètre moyen compris entre 0,5 et 3 µm, notamment entre 1 et 2,5 µm, dispersées dans le médium. La taille des gouttelettes dépend d'un certain nombre de paramètres, dont notamment la facilité d'émulsion des éléments actifs dans le médium considéré. De préférence, ces gouttelettes représentent entre 120 et 220% en poids du médium, notamment entre 150 et 200% en poids, hormis le solvant, généralement aqueux dudit médium.

De manière particulièrement préférée, on choisit des cristaux liquides sous forme de gouttelettes d'un diamètre d'environ 2,5 µm quand le médium est à base de latex de polyuréthane (biréfringence d'environ 0,1) et d'un diamètre d'environ 1 µm quand le médium est plutôt à base de polyvinylalcool (biréfringence d'environ 0,2).

L'alimentation électrique utilise des tensions comprises entre 0 et 110 V.

En variante, tout système à transmission optique électrocommandable adapté peut être utilisé en combinaison avec l'empilement transparent et réfléchissant selon l'invention.

Il s'agit d'une manière générale, d'un système électrocommandable intercalaire entre les deux feuilles à fonction verrière formant chacune une électrode autosupportée, le système fonctionnel étant électrocommandable au moyen des électrodes entre un état transparent et un état diffusant blanc.

A noter également que l'invention vise également le système de projection utilisant le vitrage ci-dessus, à savoir un système de projection comprenant un vitrage à propriétés de transmission optique électrocommandables et un projecteur prévu pour éclairer le vitrage en projection, i.e. avec des spectateurs du côté du projecteur, le vitrage étant agencé de telle sorte que la lumière incidente en provenance du projecteur arrive sur le système actif avant d'arriver et de se réfléchir au moins en partie sur l'empilement transparent et réfléchissant.

## Revendications

1. Vitrage à propriétés de transmission optique électrocommandables, ayant, dans au moins un état électrocommandable, une transmission lumineuse T_{L} supérieure ou égale à 60%, le vitrage comprenant :
- deux feuilles à fonction verrière (2A, 2B) ; et
- entre les deux feuilles à fonction verrière, un système actif (4) à propriétés de transmission optique électrocommandables,
dans lequel le vitrage comprend en outre un empilement de couches minces transparent et réfléchissant (6) comprenant :
- une couche fonctionnelle métallique (8) ; et
- un revêtement en matériau diélectrique (10) d'indice optique élevé et d'épaisseur optique suffisante pour que le vitrage présente trois pics de réflexion à trois longueurs d'ondes visibles.

2. Vitrage selon la revendication 1, dans lequel l'empilement transparent et réfléchissant (6) a un pic bleu en réflexion à λ compris entre 420nm et 480nm.

3. Vitrage selon la revendication 1 ou 2, dans lequel l'empilement transparent et réfléchissant (6) a un pic vert à λ compris entre 500nm et 570nm.

4. Vitrage selon l'une quelconque des revendications précédentes, dans lequel l'empilement transparent et réfléchissant (6) a un pic rouge en réflexion à λ compris entre 600nm et 700nm.

5. Vitrage selon l'une quelconque des revendications précédentes, dans lequel, d'au moins un état du vitrage, la réflectivité vérifie -2 ≤ a* ≤ 2 et -2 ≤ b* ≤ 2 dans le système L*, a* b*.

6. Vitrage selon l'une quelconque des revendications précédentes, dans lequel la couche fonctionnelle métallique (8) est à base d'aluminium ou à base d'argent.

7. Vitrage selon l'une quelconque des revendications précédentes, comprenant, sur et/ou sous la couche fonctionnelle métallique (8), un revêtement antireflet (14), de préférence comprenant une couche diélectrique à base d'un oxyde métallique, de préférence à base d'un oxyde de zinc dopé aluminium ou d'un oxyde de titane.

8. Vitrage selon l'une quelconque des revendications précédentes, dans lequel ledit empilement transparent et réfléchissant (6) comprend une seule couche fonctionnelle métallique (8).

9. Vitrage selon l'une quelconque des revendications précédentes, dans lequel ledit matériau diélectrique d'indice optique élevé (10) a une épaisseur optique allant de 800nm à 1600nm, de préférence de 900nm à 1400nm, de préférence encore de 1000nm à 1300nm.

10. Vitrage selon l'une quelconque des revendications précédentes, dans lequel ledit matériau diélectrique d'indice optique élevé (10) est à base d'oxyde métallique, de préférence à base d'un oxyde mixte de zinc et d'étain.

11. Vitrage selon l'une quelconque des revendications précédentes, dans lequel ledit matériau diélectrique d'indice optique élevé (10) comprend une seule couche.

12. Vitrage selon l'une quelconque des revendications précédentes, comprenant un intercalaire de feuilletage en matière thermoplastique, dans lequel les deux feuilles à fonction verrière sont feuilletées ensemble par l'intermédiaire de l'intercalaire de feuilletage.

13. Vitrage selon l'une quelconque des revendications précédentes, présentant dans au moins un état électrocommandable, une transmission lumineuse T_{L} supérieure ou égale à 70%.

14. Système de projection comprenant un vitrage selon l'une quelconque des revendications précédentes et un projecteur.

15. Procédé de projection utilisant un système de projection selon la revendication précédente, le projecteur étant utilisé en projection.

## Patentansprüche

1. Verglasung mit elektrisch steuerbaren Eigenschaften zur optischen Übertragung, umfassend, in mindestens einem elektrisch steuerbaren Zustand, eine Lichtübertragung T_{L} von mehr als oder gleich wie 60 %, wobei die Verglasung Folgendes umfasst:
- zwei Blätter mit einer Glasfunktion (2A, 2B); und
- zwischen den zwei Blättern mit Glasfunktion, ein aktives System (4) mit elektrisch steuerbaren Eigenschaften zur optischen Übertragung,
in dem die Verglasung außerdem einer Stapelung von dünnen transparenten und reflektierenden Schichten (6) umfasst, umfassend:
- eine metallische funktionelle Schicht (8); und
- eine Beschichtung aus dielektrischem Material (10) mit einem erhöhten optischen Index und einer ausreichenden optischen Dichte, damit die Verglasung drei Reflektionsspitzen mit drei sichtbaren Wellenlängen

2. Verglasung nach Anspruch 1, wobei die transparente und reflektierende Stapelung (6) eine blaue Reflektionsspitze mit λ aufweist, die zwischen 420nm und 480nm liegt.

3. Verglasung nach Anspruch 1 oder 2, wobei die transparente und reflektierende Stapelung (6) eine grüne Spitze mit λ aufweist, die zwischen 500nm und 570nm liegt.

4. Verglasung nach einem beliebigen der vorhergehenden Ansprüche, wobei die transparente und reflektierende Stapelung (6) eine rote Reflektionsspitze mit λ aufweist, die zwischen 600nm und 700nm liegt.

5. Verglasung nach einem beliebigen der vorhergehenden Ansprüche, wobei in mindestens einem Zustand der Verglasung die verifizierte Effektivität -2 ≤ a* ≤ 2 und -2 ≤ b* -2 ≤ 2 im System L*, a*, b*.

6. Verglasung nach einem beliebigen der vorhergehenden Ansprüche, wobei die metallische funktionelle Schicht (8) auf Aluminium oder auf Silber basiert.

7. Verfahren nach einem beliebigen der vorhergehenden Ansprüche, umfassend auf und/oder unter der metallischen funktionellen Schicht (8) eine Antireflexbeschichtung (14), vorzugsweise umfassend eine dielektrische Schicht, basierend auf einem Metalloxid, vorzugsweise basierend auf einem Zinkoxid, das mit Aluminium oder mit einem Titanoxid dotiert ist.

8. Verglasung nach einem beliebigen der vorhergehenden Ansprüche, wobei die transparente und reflektierende Stapelung (6) eine einzige metallische funktionelle Schicht (8) umfasst.

9. Verglasung nach einem beliebigen der vorhergehenden Ansprüche, wobei das dielektrische Material mit einem erhöhten optischen Index (10) eine optisch Dicke aufweist, die von 800nm bis 1600nm reicht, vorzugsweise von 900nm bis 1400nm, noch bevorzugter von 1000nm bis 1300nm.

10. Verglasung nach einem beliebigen der vorhergehenden Ansprüche, wobei das dielektrische Material mit erhöhtem optischen Index (10) auf Metalloxid basiert, vorzugsweise auf einem gemischten Oxid aus Zink und Zinn basiert.

11. Verglasung nach einem beliebigen der vorhergehenden Ansprüche, wobei das dielektrische Material mit erhöhtem optischen Index (10) eine einzige Schicht umfasst.

12. Verglasung nach einem beliebigen der vorhergehenden Ansprüche, umfassend eine Blätterungseinlage aus thermoplastischem Material, wobei die zwei Blätter mit Glasfunktion mit Hilfe der Blätterungseinlage zusammen geblättert sind.

13. Verglasung nach einem beliebigen der vorhergehenden Ansprüche, aufweisend mindestens einen elektrisch steuerbaren Zustand, eine Lichtübertragung T_{L} von mehr als oder gleich wie 70 %.

14. Projektionssystem, umfassend eine Verglasung nach einem beliebigen der vorhergehenden Ansprüche und einen Projektor.

15. Projektionsverfahren, verwendend ein Projektionssystem nach dem vorhergehenden Anspruch, wobei der Projektor zur Projektion verwendet wird.

## Claims

1. A glazing unit with electrically controllable optical transmission properties, having, in at least one electrically controllable state, a light transmission T_{L} higher than or equal to 60%, the glazing unit comprising:
- two sheets (2A, 2B) providing a glazing function; and
- between the two sheets providing a glazing function, an active system (4) with electrically controllable optical transmission properties,
in which the glazing unit furthermore comprises a reflective and transparent thin-film stack (6) comprising:
- a metal functional film (8); and
- a coating made of a dielectric material (10) of high refractive index and of sufficient optical thickness for the glazing unit to present three reflection peaks at three visible wavelengths.

2. The glazing unit as claimed in claim 1, in which the reflective and transparent stack (6) has a blue peak in reflection at λ comprised between 420 nm and 480 nm.

3. The glazing unit as claimed in claim 1 or 2, in which the reflective and transparent stack (6) has a green peak at λ comprised between 500 nm and 570 nm.

4. The glazing unit as claimed in any one of the preceding claims, in which the reflective and transparent stack (6) has a red peak in reflection at λ comprised between 600 nm and 700 nm.

5. The glazing unit as claimed in any one of the preceding claims, in which, in at least one state of the glazing unit, the reflectivity respects -2 ≤ a* ≤ 2 and -2 ≤ b* ≤ 2 in the L*, a*, b* system.

6. The glazing unit as claimed in any one of the preceding claims, in which the metal functional film (8) is based on aluminum or based on silver.

7. The glazing unit as claimed in any one of the preceding claims, comprising, on and/or under the metal functional film (8), an antireflection coating (14), preferably comprising a dielectric film based on a metal oxide and preferably based on aluminum-doped zinc oxide or titanium oxide.

8. The glazing unit as claimed in any one of the preceding claims, in which said reflective and transparent stack (6) comprises a single metal functional film (8).

9. The glazing unit as claimed in any one of the preceding claims, in which said dielectric material (10) of high refractive index has an optical thickness ranging from 800 nm to 1600 nm, preferably from 900 nm to 1400 nm and more preferably from 1000 nm to 1300 nm.

10. The glazing unit as claimed in any one of the preceding claims, in which said dielectric material (10) of high refractive index is based on a metal oxide and preferably based on a mixed zinc tin oxide.

11. The glazing unit as claimed in any one of the preceding claims, in which said dielectric material (10) of high refractive index comprises a single film.

12. The glazing unit as claimed in any one of the preceding claims, comprising a lamination interlayer made of a thermoplastic material, in which the two sheets providing a glazing function are laminated together by way of the lamination interlayer.

13. The glazing unit as claimed in any one of the preceding claims, having, in at least one electrically controllable state, a light transmission T_{L} higher than or equal to 70%.

14. A projection system comprising a glazing unit as claimed in any one of the preceding claims and a projector.

15. A projection method using a projection system as claimed in the preceding claim, the projector being used in front projection.
